# EUROPÄISCHE PATENTSCHRIFT

(11) **EP 0 325 716 B1**
(45) Veröffentlichungstag und Bekanntmachung des Hinweises auf die Patenterteilung: **20.10.1993**
(21) Anmeldenummer: 88119058.1
(22) Anmeldetag: 17.11.1988
(51) Int. Cl.: H04Q 11/04, H04M 11/06

(54) **Verfahren zum Anschluss von Schmalband- und Breitbandendgeräten an einen Breitband-Teilnehmeranschluss einer digitalen Vermittlungsanlage**
Method for connecting small-band and wide-band terminals to a wide-band subscriber line of a digital exchange
Procédé pour connecter des terminaux à bande étroite et à large bande à une ligne d'abonné à large bande d'un central de commutation numérique

(30) Priorität: 26.01.1988 DE 3802099
(43) Veröffentlichungstag der Anmeldung: 02.08.1989
(73) Patentinhaber: TELENORMA GMBH, 60326 Frankfurt am Main (DE)
(72) Erfinder: Zilias, Jürgen, Dipl.-Ing., D-6257 Hünfelden 2 (DE)

(56) Entgegenhaltungen:
- EP-A- 0 124 858
- CH-A- 527 547
- DE-A- 3 536 874
- DE-A- 3 544 797
- IEEE TRANSACTIONS ON COMMUNICATIONS. vol. COM-30, no. 9, September 1982, NEW YORK, US, Seiten 2163 - 2171; H.BUENNING et al.: "Subscriber stations in service integrated optical broad band communications systems"

## Beschreibung

Die Erfindung betrifft ein Verfahren zum Anschluß von Schmalband- und Breitbandendgeräten an einen Breitband-Teilnehmeranschluß einer digitalen Vermittlungsanlage nach dem Oberbegriff des Patentanspruchs 1.

Aus der DE-A-3 438 340 ist eine Anordnung zum Anschließen von Endgeräten und ein Verfahren zum Zuteilen von Kanälen an diese Endgeräte bekannt. Es handelt sich dabei um den Anschluß von Schmalband-Endgeräten und um sogenannte Wideband-Endgeräte. Unter dem Begriff Schmalband-Endgeräte versteht man Fernsprechapparate und andere Endgeräte, für welche zur Informationsübertragung die Bandbreite eines Fernsprechkanals, also 64 kBit/s ausreichend ist. Der Begriff Wideband-Endgeräte ist so definiert, daß diesen mehrere Schmalbandkanäle bis zu 30 x 64 kBit/s zugeordnet werden können. In der DE-A-3 438 340 sind von einer Anschlußeinheit ausgehend mehrere Konfigurationen für Wideband-Endgeräte aufgezeigt, wobei zusätzliche Busleitungen, Sternleitungen oder Ringleitungen vorgesehen sind. Jedes Wideband-Endgerät ist außerdem an eine Schnittstelle für einen Basiskanal (64 kBit/s) angeschlossen, worüber auch der Signalisierungskanal geführt ist. Die gesamte Anordnung baut auf dem PCM-30-System auf, so daß keine Aussagen über Breitband-Datenübertragung oder den Anschluß von Breitband-Endgeräten gemacht werden.

Die Aufgabe der Erfindung besteht darin, ein Verfahren vorzustellen, wobei die Anschlußeinheit, bzw. die Netzabschlußeinrichtung, so ausgestaltet und ergänzt ist, daß neben Schmalbandendgeräten eine Vielzahl von Breitbandendgeräten angeschlossen werden kann. Dabei soll es auch möglich sein, diese Breitbandendgeräte räumlich weit abgesetzt von der Netzabschlußeinrichtung und in unterschiedlichen Konfigurationen zu betreiben. Es ist außerdem Aufgabe der Erfindung, das Verfahren derart auszugestalten, daß der für alle Endgeräte gemeinsame Signalisierungskanal wahlfrei jeweils nur einem Endgerät zugeteilt werden kann.

Zur Lösung dieser Aufgabe sind Merkmale vorgesehen, wie sie im Patentanspruch 1 angegeben sind.

Damit wird in vorteilhafter Weise eine hohe Flexibiltät bei Neuinstallation und beim Nachrüsten von Breitbandendgeräten erreicht. Es ist außerdem gewährleistet, daß mehrere Breitband-Endgeräte zusammen mit weiteren Schmalband-Endgeräten Zugang zu einem gemeinsamen Signalisierungskanal haben, wobei der Zugriff jeweils nur einem einzigen Endgerät zugeteilt wird. Damit sind alle Endgeräte unter der gleichen Teilnehmerrufnummer zu erreichen.

Mit den in den Unteransprüchen angegebenen Weiterbildungen der Erfindung werden vorteilhafte Ausgestaltungen der Anordnung aufgezeigt.

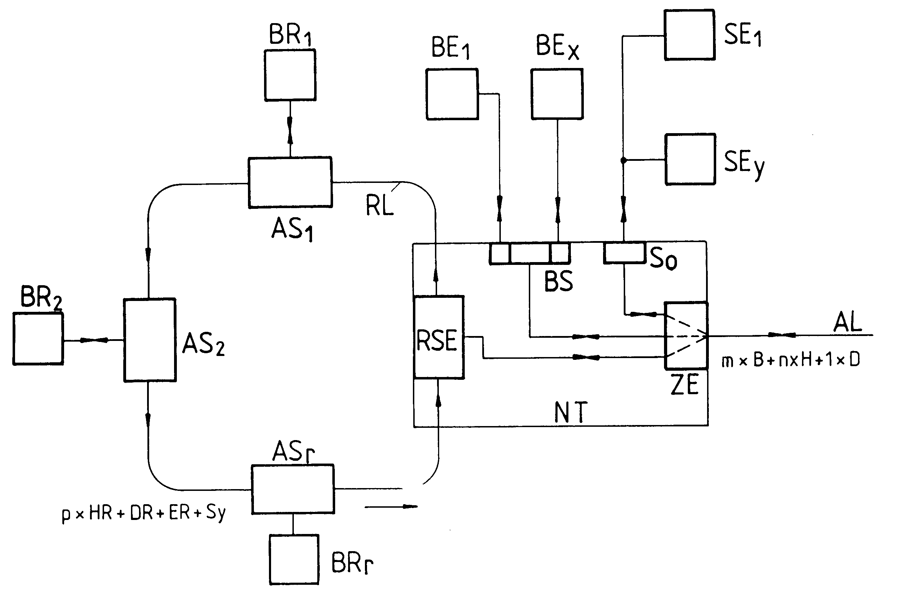

Ein Ausführungsbeispiel der Erfindung wird nachfolgend anhand einer Zeichnung näher erläutert. In der Zeichnung ist das Blockschaltbild einer Netzabschlußeinrichtung NT dargestellt, wo die von einer Vermittlungsanlage kommende Anschlußleitung AL endet. Diese Anschlußleitung AL ist für eine Breitbandübertragung ausgelegt, so daß darauf mehrere Schmalbandkanäle B, eine Anzahl n von Hochgeschwindigkeitskanälen H, welche zu Breitbandkanälen zusammengefaßt werden können, und ein gemeinsamer Signalisierungskanal D übertragen werden können. Da für alle an dieser Anschlußleitung AL betriebenen Endgeräte gemeisam nur ein einziger Signalisierungskanal D vorgesehen ist, enthält die Netzabschlußeinrichtung NT eine Zugriffssteuereinrichtung ZE. Die Zugriffssteuereinrichtung ZE ist so ausgelegt, daß nicht mehr als eine Schnittstelle gleichzeitig zum Signalisierungskanal D Zugriff haben kann. Jede einzelne Schnittstelle RSE, BS, So steuert den Zugriff zum gemeinsamen Signalisierugnskanal D so, daß auch nur ein einziges an die jeweilige Schnittstelle angeschlossenes Endgerät einen temporären Zugriff zum Signalisierungskanal D bekommen kann.

An eine der in der Netzabschlußeinrichtung NT vorhandenen Schnittstellen So sind in bekannter Weise Schmalbandendgeräte SE1 bis SEy angeschlossen. Für Breitband-Endgeräte BE1 bis BEx sind eine oder mehrere Breitbandschnittstellen BS vorgesehen, woran die Breitband-Endgeräte BE1 bis BEx sternförmig angeschlossen sind. Eine weitere Schnittstelle der Netzabschlußeinrichtung ist die Ringsteuereinrichtung RSE, woran eine Ringleitung RL angeschlossen ist, in welche seriell mehrere Anschlußschaltungen AS1 bis ASr eingeschleift sind. An diese Anschlußschaltungen AS1 bis ASr ist jeweils eines der Breitband-Endgeräte BR1 bis BRr angeschlossen. Auf der Ringleitung werden mehrere zu Breitbandkanälen zusammenfaßbare Hochgeschwindigkeits-Datenkanäle pxHr, ein ringinterner Signalisierungskanal DR, ein Echokanal ER sowie eine Synchronisierungsinformation Sy übertragen.

Nachfolgend wird beschrieben, welche Vorgänge in der Netzabschlußeinrichtung NT ablaufen, wenn von einem der mit der Anschlußleitung AL verbindbaren Endgeräte der Zugriff zum gemeinsamen Signalisierungskanal D beansprucht wird.

Bei den an die zugehörige Schnittstelle So angeschlossenen Schmalband-Endgeräten SE1 bis SEy wird so verfahren, daß zunächst diese Schnittstelle So den Anforderungswunsch an die Zugriffssteuereinrichtung ZE weitergibt. Bei freiem D-Kanal teilt die Zugriffssteuereinrichtung ZE diesen der anforderden Schnittstelle zu und sperrt den Zugriff für die anderen Schnittstellen RSE und BS. In gleicher Weise verfährt die Zugriffssteuereinrichtung ZE, wenn der Signalisierungskanal D von einer anderen Schnittstelle RSE oder BS beansprucht wird, wobei dann den jeweils übrigen Schnittstellen von der Zugriffssteuereinrichtung ZE aus sofort ein Besetztkriterium übermittelt wird. Dieses Besetztkriterium wird je nach Struktur der betreffenden Schnittstelle und nach dem innerhalb einer solchen Schnittstelle gültigen Signalisierungsverfahren entweder den Endgeräten direkt mitgeteilt, oder es wird eine Anforderung abgewiesen, wobei dann zu dem betreffenden Endgerät eine Abweisungsmeldung übertragen wird.

Für die an die Ringleitung RL angeschlossenen Endgeräte BR1 bis BRr wird der Zugriff zum gemeinsamen Signalisierungskanal D durch die Ringsteuereinrichtung RSE geregelt, wozu auf der Ringleitung RL eine ringinterner Signalisierungskanal DR vorgesehen ist. Wenn der gemeinsame Signalisierungskanal D frei ist, wobei dieses Kriterium, wie zuvor beschrieben worden ist, von der Zugriffssteuereinrichtung ZE der Ringsteuereinrichtung RSE mitgeteilt wird, so läuft eine diesen Zustand charakterisierende Bitfolge auf der Ringleitung RL um. Daraufhin ist jedes an die Ringleitung RL angeschlossene Endgerät BR1 bis BRr befähigt, zunächst den ringinternen Signalisierungskanal DR zu belegen.

Die Belegung des ringinternen Signalisierungskanals DR geschieht dadurch, daß von einem anfordernden Endgerät BR über die zugeordnete Anschlußschaltung AS die den ringinternen Signalisierungskanal DR als frei kennzeichnende Bitfolge verändert wird. Diese veränderte Bitfolge läuft nun auf der Ringleitung RL weiter, so daß nachfolgende Anschlußschaltungen AS den ringinternen Signalisierungskanal DR nicht mehr als frei erkennen können.

Wenn die Ringsteuereinrichtung RSE eine die Belegung des ringinternen Signalisierungskanals DR kennzeichnende Bitfolge empfängt, so wird sofort eine Anforderung an die Zugriffssteuereinrichtung ZE abgegeben, damit von dort aus der Zugriff der übrigen Schnittstellen BS und So zum gemeinsamen Signalisierungskanal D der Anschlußleitung AL gesperrt werden kann.

Die Ringsteuereinrichtung RSE gibt nun die Bitfolge, welche die Belegung des ringinternen Signalisierungskanals DR charakterisiert, unverändert im Echokanal ER wieder auf die Ringleitung. Wenn nun die sendende Anschlußschaltung AS auf dem Echokanal ER die gleiche Bitfolge erkennt, welche zuvor beim Belegen des ringinternen Signalisierungskanals DR abgesendet wurde, so ist damit festgelegt, daß das an dieser Anschlußschaltung, z.B. AS1, angeschlossene Breitband-Endgerät BR1 den Zugriff zum internen Signalisierungskanal DR und auch zum gemeisamen Signalisierungskanal D der Anschlußleitung AL bekommen hat. Andere an die Ringleitung RL angeschlossene Breitband-Endgeräte können den ringinternen Signalisierungskanal DR nicht mehr belegen, weil die ein Freisein dieses Kanals charakterisierende Bitfolge nicht mehr im Umlauf ist. Da von der Zugriffssteuereinrichtung ZE der Zugriff für die übrigen Schnittstellen BS und So, wie zuvor beschrieben worden ist, bereits gesperrt wurde, kann auch keines der übrigen Endgeräte BE oder SE einen Zugriff zum gemeinsamen Signalisierungskanal D der Anschlußleitung AL erlangen.

Es kann nun vorkommen, daß eine von einem an der Ringleitung RL angeschlossenen Breitbandendgerät, z.B. BR1, ausgehende Anforderung den ringinternen Signalisierungskanal frei vorfindet, wobei die zugehörige Anschlußschaltung AS1 den ringinternen Signalisierungskanal DR belegt, indem, wie zuvor beschrieben worden ist, die Bitfolge verändert wird, und daß diese veränderte Bitfolge bei der Ringsteuereinrichtung RSE eintrifft, obwohl inzwischen von einer anderen Schnittstelle BS oder So aus der gemeinsame Signalisierungskanal D belegt worden ist.

Diese Situation kann auftreten, weil die Zugriffsmeldung erst dann von der Ringsteuereinrichtung RSE an die Zugriffssteuereinrichtung ZE abgegeben werden kann, wenn die veränderte Bitfolge dort angekommen ist. Falls also in der Zwischenzeit der gemeinsame Signalisierungskanal D der Anschlußleitung AL bereits anderweitig belegt worden ist, so hat die Ringsteuereinrichtung RSE eine Besetztmeldung empfangen. Diese Besetztmeldung führt dazu, daß die von der Ringleitung RL angekommene Bitfolge nicht in gleicher Form sondern in veränderter Form weitergegeben wird. Die Anschlußschaltung AS1, die zuvor eine zur Belegung des ringinternen Signalisierungskanals DR dienende Bitfolge abgesendet hatte, erkennt nun einen Unterschied zwischen der abgesendeten und der auf dem Echokanal ER empfangenen Bitfolge. Daraufhin wird das Senden weiterer Bitfolgen verhindert, womit der Anschlußschaltung AS1 der Zugriff zum ringinternen Signalisierungskanal DR wieder entzogen wird. Diese veränderte Bitfolge signalisiert auch gleichzeitig allen anderen an der Ringleitung RL angeschlossenen Anschlußschaltungen AS2 bis ASr, daß der ringinterne Signalisierungskanal DR besetzt ist.

Wenn von der Zugriffssteuereinrichtung ZE eine Schnittstelle RSE, BS, So für den Zugriff zum gemeinsamen Signalisierungskanal D auf der Anschlußleitung AL gesperrt wird, so wird dieses Kriterium innerhalb der Schnittstelle und zu den daran angeschlossenen Endgeräten hin so weiterbearbeitet, wie es das für die jeweilige Schnittstelle festgelegte Protokoll vorschreibt. Auf die für die Breitbandschnittstellen BS und die Schmalbandschnittstellen So verwendeten Protokolle soll an dieser Stelle nicht näher eingegangen werden, weil diese Verfahren nicht unmittelbar zum Gegenstand der Erfindung gehören.

Für die Ringsteuereinrichtung RSE wurde bereits beschrieben, auf welche Weise der Frei- oder Besetztzustand des ringinternen Signalisierungskanals DR den Anschlußschaltungen AS mitgeteilt wird. Der Besetztzustand des ringinternen Signalisierungskanals DR kann, wie dies bereits beschrieben worden ist, entweder dadurch entstehen, daß eine der Anschlußschaltungen AS diesen Signalisierungskanal DR belegt hat, oder dadurch, daß die Ringsteuereinrichtung RSE aufgrund eines Befehls von der Zugriffssteuereinrichtung ZE eine andere als die den Freizustand des Signalisierungskanals charakterisierende Bitfolge auf die Ringleitung RL sendet.

Der Freizustand des ringinternen Signalisierungskanals DR wird von den Anschlußschaltungen AS daran erkannt, daß eine Bitfolge in einer vorbestimmten Anzahl von Bits der gleichen Polarität empfangen wird, welche sonst aufgrund der im Signalisierungskanal D verwendeten HDLC-Codierung nicht auftritt. Dabei ist es möglich, daß den einzelnen Anschlußschaltungen AS1 bis ASr unterschiedliche Prioritäten zugeteilt werden, indem die Anzahl der zu erkennenden gleichartigen Bits für jede Anschlußschaltung AS unterschiedlich festgelegt wird. Dabei hat dann diejenige Anschlußschaltung AS, welche die größte Anzahl gleichartiger Bits erkennen muß, die niedrigste Priorität. Dies ergibt sich automatisch durch die Art des internen Signalisierungskanals DR, weil die einzelnen Bits in verschiedenen Umläufen zeitlich nacheinander auf der Ringleitung RL erscheinen, wobei natürlich für das Erkennen von mehreren gleichartigen Bits eine größere Zeitspanne erforderlich ist.

Von der Ringsteuereinrichtung RSE aus wird neben den bereits erwähnten Nutzdatenkanälen HR, dem ringinternen Signalisierungskanal DR und dem Echokanal ER außerdem eine zusätzliche Synchronisierinformation SY ausgesandt, damit die einzelnen Anschlußschaltungen AS synchron arbeiten können. Die Struktur der Ringleitung RL ist so ausgelegt, daß die Gesamtlaufzeit unterhalb eines vorgegebenen Wertes von z.B. 125 µs liegt. In der Ringsteuereinrichtung RSE ist ein Pufferspeicher vorgesehen. womit die Umlaufzeit auf den genauen vorgegebenen Wert ergänzt wird Damit wird erreicht, daß die Anschlußschaltungen AS ein genaues Zeitraster zur Verfügung gestellt bekommen.

Entsprechend der vorgegebenen Laufzeit und entsprechend der auf die hohe Bitrate abgestimmten Ausführung der Ringleitung RL kann die Entfernung zwischen den einzelnen Anschlußschaltungen AS mehrere 100 m betragen, womit erreicht wird, daß Breitband-Endgeräte auch in einiger räumlicher Entfernung von der Netzabschlußeinrichtung NT aufgestellt werden können. Zusätzlich ist es noch möglich, daß Breitband-Endgeräte BR räumlich von ihrer Anschlußschaltung AS abgesetzt angeordnet sein können. Es ist dann zweckmäßig, die Bitrate auf der zu dem Breitband-Endgerät, z.B. BR1, führenden Leitung niedriger auszulegen als die Bitrate, mit der die Ringleitung RL betrieben wird. Mit Hilfe der Ringleitung RL lassen sich also unabhängig von übrigen Bedingungen an der Netzabschlußeinrichtung NT die Anschlußbedingungen und Aufstellungsmöglichkeiten von Breitband-Endgeräten den jeweiligen Anforderungen entsprechend flexibel gestalten.

## Patentansprüche

1. Verfahren zum Anschluß von Schmalband- und Breitbandendgeräten an einen Breitband-Teilnehmeranschluß einer digitalen Vermittlungsanlage, wobei über eine Anschlußleitung(AL) mehrere Schmalbandkanäle (mxB) und Breitbandkanäl (mxH) übertragen werden und nur ein einziger Signalisierungskanal (D) vorgesehen ist, auf den alle Endgeräte (SE,BE,BR,) zügreifen können, so daß nie mehr als ein Endgerät gleichzeitig Zugang zu diesem Signalisierungskanal hat, und wobei eine Netzabschlußeinrichtung (NT) mit genormten Schnittstellen vorgesehen ist,
**dadurch gekennzeichnet,**
daß neben direkt an die Netzabschlußeinrichtung (NT) über Breitbandschnittstellen (BS) angeschlossenen Breitbandendgeräten (BE1 bis BEx) und über eine Schmalbandschnittstelle (So) angeschlossenen, an einem Bussystem oder in Sternkonfiguration betriebenen Schmalbandendgeräten (SE1 bis SEy) zusätzliche Breitbandendgeräte (BR1 bis BRr) an eine Ringleitung (RL) angeschlossen werden, die von einer in der Netzabschlußeinrichtung (NT) befindlichen Ringsteuereinrichtung (RSE) gesteuert wird und einen internen Signalisierungskanal (DR) aufweist,
und daß eine Zugriffssteuereinrichtung (ZE) innerhalb der Netzabschlußeinrichtung (NT) vorgesehen ist, welche in Zusammenarbeit mit der Ringsteuereinrichtung (RSE) und den übrigen Schnittstellen (BS, So) bewirkt, daß jeweils nur eine Schnittstellenart und nur ein Endgerät Zugang zum Signalisierungskanal (D) der Anschlußleitung (AL) erhält.

2. Verfahren nach Anspruch 1,
**dadurch gekennzeichnet,**
daß innerhalb des auf der Ringleitung (RL) vorhandenen Signalisierungskanals (DR) eine besondere Bitfolge von der Ringsteuereinrichtung (RSE) gesendet wird, womit den an die Ringleitung (RL) angeschlossenen Breitbandendgeräten (BR1 bis BRr) der Zugriff zum internen Signalisierungskanal (DR) erteilt wird,
daß dieser Zugriff entzogen werden kann, wenn der Signalisierungskanal (D) der Anschlußleitung (AL) anderweitig besetzt ist, indem eine Veränderung der in einem Echokanal (ER) auf die Ringleitung (RL) zurückgespiegelten Signalisierungsinformation durch die Ringsteuereinrichtung (RSE) vorgenommen wird.

3. Verfahren nach Anspruch 1,
**dadurch gekennzeichnet,**
daß die Zugriffssteuereinrichtung (ZE) in der Netzabschlußeinrichtung (NT) bei der Vergabe der Zugriffsberechtigung zum Signalisierungskanal (D) der Anschlußleitung (AL) an die Ringsteuereinrichtung (RSE) den jeweiligen Verbindungszustand der übrigen Schnittstellen (So, BS) berücksichtigt, und daß bei zugriffsberechtigter Ringleitung (RL) der Zu-griff anderer Endgeräte (SE, BE) mit dem für die Schnitt-stelle (So) standardisierten Echoverfahren gemäß CCITT-Recommendation I.430 (Blue Book) gesperrt wird.

4. Verfahren nach Anspruch 1,
**dadurch gekennzeichnet,**
daß in der Netzabschlußeinrichtung (NT) durch die Zusammenarbeit der Ringsteuereinrichtung (RSE) mit der Zugriffssteuereinrichtung (ZE) die von den anderen Schnittstellen (BS, So) stammende Signalisierungsinformation auf den Echokanal (ER) der Ringleitung (RL) gelegt wird, falls eine der anderen Schnittstellen (BS oder So) die Zugriffsberechtigung hat,
und daß die von der Ringleitung (RL) stammende Signalisierungsinformation auf die Echokanäle der anderen Schnittstellen (BS und So) gelegt wird, falls diese nicht zugriffsberechtigt sind.

5. Verfahren nach Anspruch 1,
**dadurch gekennzeichnet,**
daß mit in die Ringleitung (RL) eingeschleiften Anschlußschaltungen (AS1 bis ASr), woran die zusätzlichen Breitbandendgeräte (BR1 bis BRr) angeschlossen sind, und in den Anschlußschaltungen (AS1 bis ASr) enthaltenen Vergleichseinrichtungen Unterschiede zwischen einer auf dem internen Signalisierungskanal (DR) gesendeten und einer auf einem Echokanal (ER) empfangenen Information festgestellt werden.

6. Verfahren nach Anspruch 5,
**dadurch gekennzeichnet,**
daß innerhalb der Ringleitung (RL) das gleiche D-Kanal-Signalisierungsprotokoll nach CCITT-Recommendation I.430 (Blue Book) verwendet wird, wie es auch für die anderen Schnittstellen (BS, So) gilt.

7. Verfahren nach Anspruch 1,
**dadurch gekennzeichnet,**
daß auf der Ringleitung (RL) neben dem internen Signalisierungskanal (DR) und einem Echokanal (ER) mehrere Breitbandkanäle (pxHR) und eine Synchronisierungsinformation (SY) übertragen wird.

8. Verfahren nach Anspruch 1,
**dadurch gekennzeichnet,**
daß die den Freizustand des internen Signalisierungskanals (DR) auf der Ringleitung (RL) kennzeichnende Bitfolge aufgrund des für den Signalisierungskanal standardisierten HDLC-Verfahrens abweicht von allen anderen im Signalisierungskanal (D, DR) verwendeten Bitfolgen.

9. Verfahren nach Anspruch 1,
**dadurch gekennzeichnet,**
daß die Umlaufzeit von Informationen auf der Ringleitung (RL) kleiner ist als 125 µs,
und daß in der Ringsteuereinrichtung (RSE) Pufferspeicher vorgesehen sind, womit die Umlaufzeit auf 125 µs ergänzt wird.

10. Verfahren nach Anspruch 1,
**dadurch gekennzeichnet,**
daß die an der Ringleitung (RL) angeschlossenen Endgeräte (BR1 bis BRr) auch räumlich abgesetzt von ihren Anschlußschaltungen (AS1 bis ASr) betrieben werden, wobei dann die Bitrate auf der zu dem betreffenden Endgerät (z. B. BR1) führenden Leitung kleiner ist als auf der Ringleitung (RL).

## Claims

1. Method for the connection of narrow-band and wide-band terminal devices to a wide-band subscriber connection of a digital communications exchange, wherein several narrow-band channels (m.B) and wide-band channels (n.H) are transmitted by way of one connecting line (AL) and only one signalling channel (D) is provided, to which all terminal devices (SE, BE, BR) can have access so that never more than one terminal device has access to this signalling channel at the same time, and wherein a network-terminating equipment (NT) with standardised interfaces is provided, characterised thereby, that apart from wide-band terminal devices (BE1 to BEx) connected by way of wide-band interfaces (BS) directly to the network-terminating equipment (NT) and narrow-band terminal devices (SE1 to SEy), which are operated at a bus system or in star configuration, connected by way of a narrow-band interface (So) directly to the network-terminating equipment (NT), additional wide-band terminal devices (BR1 to BRr) are connected to a ring line (RL), which is controlled by a ring control equipment (RSE) disposed in the network-terminating equipment (NT) and displays an internal signalling channel (DR), and that an access control equipment (ZE) is provided within the network-terminating equipment (NT), which in co-operation with the ring control equipment (RSE) and the remaining interfaces (BS, So) has the effect that only one kind of interface and only one terminal device at any time gets access to the signalling channel (D) of the connecting line (AL).

2. Method according to claim 1, characterised thereby, that a special bit sequence is transmitted from the ring control equipment (RSE) within the signalling channel (DR) present on the ring line (RL), whereby the access to the internal signalling channel (DR) is granted to the wide-band terminal devices (BR1 to BRr) connected to the ring line (RL) and that this access can be withdrawn when the signalling channel (D) of the connecting line (AL) is otherwise occupied in that a change is made by the ring control equipment (RSE) in the signalling information reflected back to the ring line (RL) in an echo channel (ER).

3. Method according to claim 1, characterised thereby, that the access control equipment (ZE) in the network-terminating equipment (NT), during the granting of the authorisation to the signalling channel (D) of the connecting line (AL) for access to the ring control equipment (RSE), takes into consideration the respective state of connection of the remaining interfaces (BS, So) and that, when the ring line (RL) is authorised for access, the access of other terminal devices (SE, BE) is blocked by the echo method standardised for the interface (So) according to CCITT recommendation I.430 (blue book).

4. Method according to claim 1, characterised thereby, that the signalling information originating from the other interfaces (BS, So) is applied in the network-terminating equipment (NT), by the co-operation of the ring control equipment (RSE) with the access control equipment (ZE), to the echo channel (ER) of the ring line (RL) in case one of the other interfaces (BS or So) has the access authorisation and the signalling information originating from the ring line (RL) is applied to the echo channels of the other interfaces (BS and So) in case these are not authorised for access.

5. Method according to claim 1, characterised thereby, that differences between an information signal transmitted on the internal signalling channel (DR) and an information signal received on an echo channel (ER) are ascertained by connecting circuits (AS1 to ASr), which are looped into the ring line (RL) and to which the additional wide-band terminal devices (BR1 to BRr) are connected, and comparing equipments contained in the connecting circuits (AS1 to ASr).

6. Method according to claim 5, characterised thereby, that the same D-channel signalling protocol according to CCITT recommendation I.430 (blue book), as applies for the other interfaces (BS, So) is also used within the ring line (RL).

7. Method according to claim 1, characterised thereby, that apart from the internal signalling channel (DR) and an echo channel (ER), several wide-band channels (pxHR) and a synchronising information signal (SY) are transmitted on the ring line (RL).

8. Method according to claim 1, characterised thereby, that the bit sequence, which identifies the free state of the internal signalling channel (DR) on the ring line (RL), differs from all other bit sequences used in the signalling channel (D, DR) by reason of the HDLC method standardised for the signalling channel (D).

9. Method according to claim 1, characterised thereby, that the circulation time of information signals on the ring line (RL) is less than 125 microseconds and that buffer storage devices, by which the circulation time is augmented to 125 microseconds, are provided in the ring control equipment (RSE).

10. Method according to claim 1, characterised thereby, that the terminal devices (BR1 to BRr), which are connected to the ring line (RL), are also operated spatially remote from their connecting circuits (AS1 to ASr), for which the bit rate on the line leading to the terminal device concerned (for example BR1) is then less than on the ring line (RL).

## Revendications

1. Procédé pour connecter des terminaux à bande étroite et à large bande à une ligne d'abonné à large bande d'un central de commutation numérique, dans lequel plusieurs canaux à bande étroite (mxB) et plusieurs canaux à large bande (nxH) sont transmis sur une ligne de raccordement (AL) et dans lequel un canal de signalisation (D) unique est prévu pour accéder à tous les terminaux (SE,BE,BR) de manière que pas plus d'un terminal à la fois ait accès au canal de signalisation, et dans lequel est prévu un dispositif de connexion au réseau avec des interfaces normalisés, caractérisé en ce que, outre des terminaux à large bande (BE1 à BEx) qui sont connectés au dispositif de raccordement au réseau (NT) par des interfaces à large bande (BS) et des terminaux à bande étroite (SE1 à SEy) connectés à un système de bus ou en configuration en étoile, des terminaux à large bande additionnels (BR1 à BRr) sont connectés à une ligne de sonnerie (RL) qui est commandée à partir d'un dispositif de commande de sonnerie (RSE) compris dans le dispositif de raccordement au réseau (NT) et qui présente un canal de signalisation (DR), et en ce que dans le dispositif de raccordement au réseau (NT) est prévu un dispositif de commande de saisie (ZE) qui travaille en coopération avec le dispositif de commande de sonnerie (RSE) et les autres interfaces (BS,So), de manière à obtenir un type d'interface seulement et un accès au canal de signalisation (D) pour un terminal seulement.

2. Procédé selon la revendication 1, caractérisé en ce que dans le canal de signalisation (DR) prévu sur la ligne de sonnerie (RL) est transmise une suite de bits particulière, par laquelle les appareils terminaux à large bande (BR1 à BRr) connectés à la ligne de sonnerie (RL) partagent l'occupation du canal de signalisation interne (DR), et en ce que cette saisie peut être supprimée lorsque le canal de signalisation (D) de la ligne de raccordement (AL) est occupé ultérieurement, une variation de l'information de signalisation réfléchie dans un canal d'écho (ER) de la ligne de sonnerie (RL) étant entreprise par le dispositif de commande de sonnerie (RSE).

3. Procédé selon la revendication 1, caractérisé en ce que, lors de l'attribution de l'autorisation de saisie du canal de signalisation (D) de la ligne de raccordement (AL), le dispositif de commande de saisie (ZE) dans le dispositif de raccordement au réseau (NT) prend en considération l'état de liaison de chacun des autres interfaces (So,BS), et en ce que, lors d'une saisie autorisée du canal de signalisation sur la ligne de sonnerie, la saisie d'autres terminaux (SE,BE) par le procédé d'écho normalisé selon la recommandation I.430 du CCITT (livre bleu) est bloquée pour l'interface (So).

4. Procédé selon la revendication 1, caractérisé en ce que dans le dispositif de raccordement au réseau (NT), les informations de signalisation provenant des autres interfaces sont appliquées dans le canal d'écho (ER) de la ligne de sonnerie (RL) par coopération du dispositif de commande de la sonnerie (RSE) avec le dispositif de commande de saisie (ZE) dans le cas où l'un des autres interfaces (BS ou So) a reçu l'autorisation de saisie, et en ce que les informations de signalisation provenant de la ligne de sonnerie (RL) sont appliquées dans les canaux d'échos des autres interfaces (BS et So) dans le cas où ceux-ci ne sont pas autorisés pour être saisis.

5. Procédé selon la revendication 1, caractérisé en ce que des distinctions sont établies entre une information envoyée dans le canal de signalisation interne (DR) et une information reçue dans un canal d'écho (ER) à l'aide de circuits de connexion (AS, à ASr) insérés dans la ligne de sonnerie (RL) auxquels sont connectés les terminaux à large bande additionnels (BR1 à BRr) et de dispositifs de comparaison contenus dans les circuits de connexion (AS1 à ASr).

6. Procédé selon la revendication 5, caractérisé en ce que dans la ligne de sonnerie (RL), est appliqué le même protocole de signalisation canal-D suivant la recommandation I.430 du CCITT (livre bleu) que pour les autres interfaces (BS, So).

7. Procédé selon la revendication 1, caractérisé en ce que, outre le canal de signalisation interne (DR) et un canal d'écho (ER), plusieurs canaux à large bande (pxHR) et une information de synchronisation (SY) sont transmis sur la ligne de sonnerie (RL).

8. Procédé selon la revendication 1, caractérisé en ce que la suite de bits caractérisant l'état libre du canal de signalisation interne (DR) sur la ligne de sonnerie (RL) sur base du procédé HDLC classique pour le canal de signalisation diffère de toutes les autres suites de bits dans le canal de signalisation (D,DR).

9. Procédé selon la revendication 1, caractérisé en ce que la période des informations sur la ligne de sonnerie (RL) est inférieure à 125 µs et en ce qu'une mémoiretampon est prévue dans le dispositif de commande de sonnerie (RSE), la période étant ainsi limitée à 125 µs.

10. Procédé selon la revendication 1, caractérisé en ce que les terminaux (BR1 à BRr) connectés à la ligne de sonnerie (RL) sont éloignés de leurs circuits de connexion (AS1 à ASr) de manière que la vitesse binaire sur la ligne conduisant vers les terminaux correspondants (par exemple BR1) est plus petite que la vitesse binaire sur la ligne de sonnerie (RL).
